# NEW EUROPEAN PATENT SPECIFICATION

(11) **EP 0 845 956 B2**
(45) Date of publication and mention of the opposition decision: **27.02.2008**
(45) Mention of the grant of the patent: 02.05.2002
(21) Application number: 96930087.0
(22) Date of filing: 22.08.1996
(51) Int. Cl.: A46B 7/06

(54) **TOOTHBRUSH**
ZAHNBÜRSTE
BROSSE A DENTS

(30) Priority: 25.08.1995 GB 9517450
(43) Date of publication of application: 10.06.1998
(60) Divisional application: 99204325.7
(73) Proprietor: SmithKline Beecham Consumer Healthcare GmbH, 77815 Bühl (DE)
(72) Inventor: HALM, Hans, D-44628 Herne (DE); KRÄMER, Hans, SmithKline Beecham C. Hlthcare. GmbH, D-77815 Bühl (DE)
(74) Representative: Walker, Ralph Francis
(86) International application number: PCT/EP1996/003721
(87) International publication number: WO 1997/007707

(56) References cited:
- WO-A-92/17093
- WO-A-96/02165
- DE-A- 1 657 299
- FR-A- 707 727
- FR-A- 2 040 545
- GB-A- 189 335
- GB-A- 647 924
- US-A- 1 927 365
- US-A- 2 266 195
- US-A- 3 188 672
- US-A- 5 373 602

## Description

This invention relates to toothbrushes, in particular to toothbrushes having a flexibly linked region in their head.

Toothbrushes having a flexibly linked region in their head are known. For example WO 92/17093 discloses a toothbrush in which the head is divided into two or more segments which are flexibly and resiliently linked to each other and/or to the handle of the toothbrush. A particular form of the toothbrush of WO 92/17093 has a head which has grooves in the reverse face of the head from which the bristles extend, these grooves being filled with an elastomeric material to modulate the flexibility. The embodiments disclosed in have their grooves distributed in a generally uniform distribution over the reverse face of the head, or around the longitudinal mid point of the head, so as to enable the whole head to accommodate itself to the curved shape of the teeth. WO 96/02165 discloses toothbrushes with flexible heads similar in construction to those of WO 92/17093, and having a generally concave profile of bristle ends. DE-G 87 05 474.4 discloses a toothbrush in which the tip region of the head is hinged to a base region of the head and an operating button on the handle allows the tip region to fold relative to the base region.

It is an object of this invention to provide a toothbrush in which the flexibility of the head is concentrated in the tip of the head remote from the handle, so as to improve the ability of the toothbrush to clean surfaces of the teeth which face the back of the mouth.

According to this invention a process is provided according to claim 1.

The construction of toothbrush made by the process of this invention concentrates flexibility of the head at the tip end of the toothbrush, the linking of the tip segment and base segment is preferably in a manner which enables the tip segment to fold or pivot resiliently relative to the base segment during toothbrushing. The link provided at the link region between the tip segment and the base segment allows the tip segment to fold or pivot during use about a fold or pivot axis which is in the plane of the bristle face and generally transverse to the longitudinal toothbrush axis such that bristles on the tip segment can lean backwards, i.e. so that the free ends of bristles in the tip segment swing toward the handle, assisting the bristles to clean surfaces of the teeth which face the back of the mouth. The flexible linking also helps to prevent excessive brushing pressure from being applied during toothbrushing.

Normally the head of the toothbrush will adjoin the handle of the toothbrush via a neck region between the base of the toothbrush head and the part of the handle which is held during use.

The base segment is substantially rigid, that is, during the operation of brushing the teeth the base segment does not significantly flex beyond the usual limits of flexing of a plastics material toothbrush head.

The link segment is preferably in the longitudinal half of the head furthest from the base of the head. Suitably the base segment extends for at least 60%, for example at least 75% of the distance between the base end of the head and the tip of the head.

The tip segment is also substantially rigid, so that the tip segment does not itself significantly flex apart from its folding or pivoting relative to the base segment. The tip segment may be of a variety of shapes accommodated to the shape of the tip of the head, e.g. circular, triangular (including ogival), rectangular, elongate, lozenge shape etc.

In its non-stressed condition, i.e. when not being used, the bristle face of the tip segment forms an angle of less than 180° with the bristle face of the base segment, e.g. 150°-179°, suitably 155°-170°. A suitable angle is one in which the free ends of the bristles on the handle side of the tip portion are in close proximity to, e.g. touching, the free ends of bristles on the tip side of the base segment.

The link region between the tip segment and the base segment comprises a groove in the head material between the tip and base segments which is bridged by one or more thin links of flexible and resilient plastics material. In this construction the head is effectively in two segments linked by such link. Such link may comprise one or more thin strip, or a continuous thin membrane, made of a both flexible and resilient plastics material. These thin strips or membrane may be in the same plane as a substantially planar head, or may slope or may be curved out of planarity. The plastics material may be the same plastics material as the tip and base segments but being flexible by virtue of thinness, e.g. the tip, base and link may be integrally moulded.

The link region between the tip segment and the base segment comprises a composite segment between the tip segment and base segments having structural elements made of both plastics material and the elastomeric material, that is a combination of thin strips or continuous membrane of a both flexible and resilient plastics material, e.g. integral with the head, and also by the elastomeric material in the groove. These thin strip(s) or membrane may be in the same plane as a substantially planar head, or may slope or may be curved or folded out of planarity. In this construction the head is effectively in two segments linked by such links, and the links may be embedded in a covering layer of rubber.

Such a composite region may for example comprise one or more, for example two, strips of a plastics material integral with the material of the head, the strips being thinner than the thickness of the head, and extending between the tip segment and base segment to bridge the groove between the tip segment and the base segment, the groove also containing an elastomeric material, suitably bonded to the sides of the space and to the strips and suitably substantially filling the groove, optionally also bulging above the surface of the surrounding plastics material of the head . Relative to the thickness of the toothbrush head the strips in such a construction may be closer to the bristle face than to the back of the head. The plastics material parts in such a composite region may be thick enough to contribute materially to the flexibility and resilience of the link region, or alternatively it may be so thin as to contribute little to the flexibility and resilience of the link region, and may thus serve simply to retain the tip and head segments together before the elastomer is added.

The above-mentioned groove is open at the bristle face of the head and may be open at the opposite face of the head. The groove may be filled wholly or partly with elastomeric material to form a composite region.

The groove may pass, in places at least, completely through the thickness of the head, for example leaving bridges of head material crossing the groove between places where the groove passes completely through the thickness of the head. Such a groove may be wholly or partly filled with elastomeric material to thereby form a composite region.

The groove may in plan be substantially straight aligned widthways, curved or angular, e.g. generally "C", "U" or "V" shaped. In such a construction the convex bulge of the "U" or "C" or the apex of the "V" may point either toward the handle or toward the tip of the head away from the handle. Alternatively such a groove may be narrow at the edges of the head and widen toward the centre of the head or vice versa.

The groove may extend widthways to the sides of the toothbrush head, and elastomeric material therein may be extended around the tip segment of the head and/or around the base segment of the head to form an elastomeric buffer around the toothbrush head to soften any impact of the toothbrush head with the gums of the user, and also to gently massage the gums. Alternatively elastomeric material may be provided around the tip segment of the head to form an elastomeric buffer in a known manner e.g. as in FR 442832 and DE 36 28 722.

The outer surface of the elastomeric material may have a corrugated surface, which may further help to control the flexibility of the link region.

In one embodiment of the toothbrush made by the process of this invention, the head is constructed such that the tip segment may fold backwards resiliently relative to the base segment, during toothbrushing, about a widthways oriented fold axis that crosses the head in the link region. The fold axis may cross the head in or on the edge of a groove as described above. In such a construction, the groove may be shaped such that the widthways oriented fold axis crosses the head of the toothbrush entirely within the groove. The folding may occur by bending of the above described plastic material parts, or bending at the point where such a part meets the edge of the groove.

Such a construction can cause the entire tip segment to fold in the bristle direction away from the plane which lies between the bristle face and the opposite face of the head, so that the tip segment in effect folds backwards towards the base segment during use in toothbrushing. This folding can facilitate tooth cleaning, for example enabling the toothbrush head to accommodate itself better to the curved shape of the row of the teeth.

In an alternative embodiment of the toothbrush made by the process of this invention, the tip segment and /or link may be constructed and positioned such that the tip segment can pivot resiliently relative to the base segment during toothbrushing, about a widthways oriented pivot axis that crosses the tip segment intermediate between its tip end and its base end.

Such a construction causes pivoting of the tip segment about this axis intermediate along its length, i.e. causes the tip segment to have a "see-saw" action in which during toothbrushing part of the tip segment toward the tip of the head pivots in the bristle direction away from the plane which lies between the bristle face and the opposite face of the head, and the part of the tip segment toward the base segment of the head pivots in a direction opposite to the bristle direction away from the plane which lies between the bristle face and the opposite face of the head, or *vice versa*.

In this embodiment such pivoting may for example be achieved in a construction of head in which the tip end of the base segment is in the form of two limbs which partly surround a part of the tip segment which extends in the base direction between them, with the link between the tip segment and the base segment. For example the tip end of the base segment may be made in the shape of a two pronged fork-like frame, with a part of the tip segment between the two prongs of the fork, and a link between the tip segment and base segment.

In an alternative construction of the head of this embodiment the base end of the tip segment may be in the form of two limbs which partly surround a part of the base segment which extends in the tip direction between them, with the link between the tip segment and the base segment. For example the base end of the tip segment may be made in the shape of a two pronged fork-like frame, with a part of the base segment between the two prongs of the fork, and a link between the tip segment and base segment.

For example the tip segment may be made generally "C", "U" or "V" shaped with its limbs toward the base segment, or "Y" shaped with the upper limbs of the Y towards the base segment. The part of the base segment which extends in the tip direction may lie between the said limbs.

In a construction of head in which the tip end of the base segment is in the form of two limbs which partly surround a part of the tip segment which extends in the base direction between them, with a groove between the tip segment and the base segment, thin links of flexible and resilient plastics material as described above are provided between the said limbs and the respective tip segment. In a construction of head in which the base end of the tip segment is in the form of two limbs which partly surround a part of the base segment which extends in the tip direction between them, with a groove between the tip segment and the base segment, such links may be provided between the said limbs and the base segment. Suitably in such toothbrushes such links may be provided at points widthways diametrically opposite each other to define a pivot axis and to encourage pivoting in a plane in which the longitudinal axis lies. Additionally or alternatively such links may be provided at other points in the groove to encourage pivoting about other axes.

The elastomeric material may be an elastomeric material as commonly used in two-component toothbrushes, e.g. that described in EP 0 336 641, which can be bonded to plastics materials used for toothbrush handle manufacture. Such an elastomeric material can be injected into the toothbrush mould shortly after injection moulding of the plastics material parts of the toothbrush so that the hot plastics material fuses and bonds with the elastomeric material. This is a generally known process.

In the base segment the bristles may be disposed in discrete generally circular section tufts in patterns which are generally known in the field of toothbrushes, for example in longitudinal or widthways rows at a generally conventional spacing. If fused in, the bristles may additionally or alternatively be disposed in "mats" of a cross section which may be circular or other than circular.

In the tip segment the bristles may be disposed in discrete generally circular section tufts, or if fused in, the bristles may additionally or alternatively be disposed in "mats" of a cross section which may be circular or other than circular. In the tip segment it is preferred to dispose the bristle tufts in either (i) a pattern of discrete tufts arranged in a generally circular or polygonal pattern, or (ii) a single tuft of generally rounded cross section perpendicular to the bristle face, or (iii) a tuft of generally "C" or "U" shaped cross section perpendicular to the bristle face having at least one of the limbs of the "C" or "U" aligned generally parallel to the longitudinal toothbrush axis and with the rounded bend of the "C" or "U" facing the end of the bristle face remote from the handle.

The ends of the bristles remote from the bristle face may be substantially coplanar. Alternatively the ends may undulate about a plane to accommodate the ends of the bristles to the undulating profile of the teeth or to lie in a "battlemented" shape to help clean the interdental spaces. Such undulating surface bristles are known. Additionally or alternately the ends of the bristles remote from the bristle face on the tip segment may lie in a different plane to the ends of the bristles remote from the bristle face on the base segment of the head. For example the plane of the said ends on the tip segment may slope upwards away from the bristle face in the direction away from the handle.

The handle may be of generally conventional construction, and may for example include a folded flexible region, and grip pads of elastomeric material, as exemplified in EP 0 336 641. Elastomeric grip pads may alternatively or additionally be located on other parts of the toothbrush handle as convenient.

The process may be a generally conventional injection moulding technique, for example in which a plastics material " skeleton" is first made by injection moulding, then elastomer parts if present, are introduced by a subsequent injection moulding step, in which the elastomer is injected as a hot fluid and bonds to the plastics material. Such techniques, and suitable plastics materials and elastomer materials, are well known. The link region includes an elastomer material which may be injected with the same injection step as is used to inject elastomer grip pads, and these various regions of elastomeric material may be connected by moulding channels in a known manner.

The bristles may also be of generally conventional construction and materials, and may be fastened into the bristle face by generally known techniques. For example small metal clips around the ends of bristles to be fixed into the head, which are then wedged into sockets in the bristle face. Alternatively the bristles may be fused into the head material, again using known techniques.

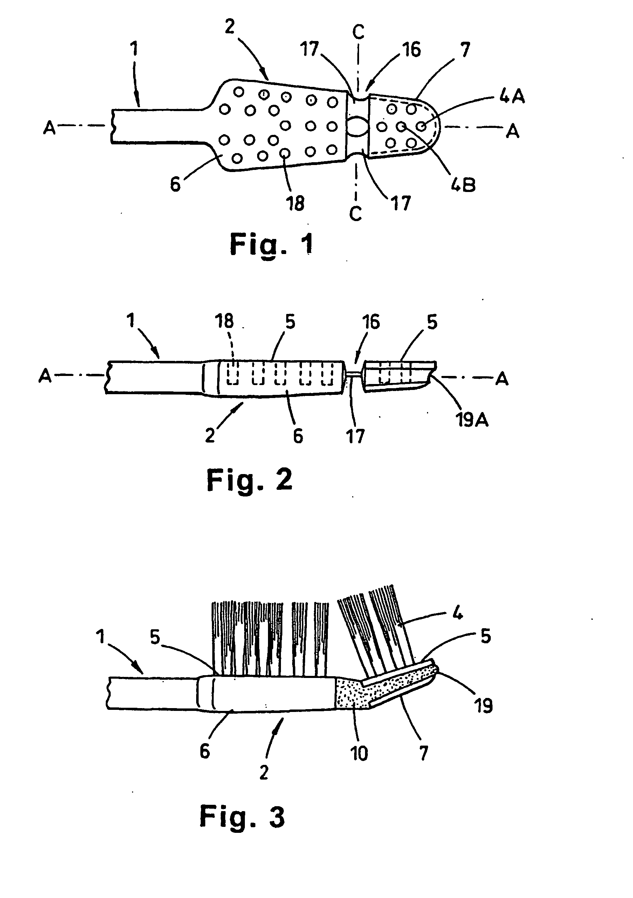

The invention will now be described by way of example only with reference to the accompanying figures in which Figs. 1 to 7 show plan, side and perspective views of toothbrush heads made by the process of the invention, and views without the elastomeric material, thereby showing the underlying construction of the head.

Referring to Figs. 1 to 7, a toothbrush in which the tip segment is constructed to fold resiliently relative to the base segment, during toothbrushing, about a widthways oriented fold axis that crosses the head at the edge of the tip segment which faces the base segment is shown.

This toothbrush comprises a handle 1 with a head 2 integrally adjoining the handle at a base end 3 of the head, the head 2 and handle 1 being disposed along a longitudinal toothbrush axis A-A, the head 2 having bristles 4 extending from a bristle face 5 of the head in a general bristle direction B.

The head 2 comprises two segments. A substantially rigid base segment 6 integral with the toothbrush handle 1 extends from the base end 3 of the head 2 to a distance in the longitudinal half of the head 2 furthest from the base 3 of the head. A tip segment 7 extends from the extreme tip 8 of the head 2 toward the base segment 6. Both the base segment 6 and tip segment 7 are bristle 4 bearing.

Referring to Figs. 1, 2 and 3, a construction of the head 2 of a toothbrush in which the tip segment 7 is constructed to fold resiliently relative to the base segment 6, during toothbrushing, about a widthways oriented fold axis C-C that crosses the head is shown on plan and in side views.

In Figs. 1 and 2 the head 2 is shown without elastomeric material. The tip segment 7 is generally triangular in shape with a rounded tip. A link segment is provided by a groove 16 between the tip segment 7 and the base segment 6 which is bridged by two strips 17 of a plastics material integral with the material of the head, the strips being thinner than the thickness of the head 2, and extending between the tip segment 7 and base segment 6 to bridge the groove 16. Relative to the thickness of the toothbrush head 2 the strips are closer to the bristle face 5 than to the back of the head. The bristle face 5 of both the tip 7 and base segment 6 are provided with socket holes 18 for the insertion of bristles 4. As shown in Fig 2, in the tip segment 7 the holes 18 are disposed to arrange bristles 4 in a pattern of discrete tufts 4A arranged in a generally circular or polygonal pattern, around a central tuft 4B.

As shown in Fig 2 the "skeleton" consisting of just the plastic material parts of the head has been made by an injection moulding process, with the bristle face 5 substantially planar.

As shown in Fig 3, the "skeleton" so formed has been folded about the axis C-C so that an obtuse angle of about 165° is formed between the bristle face 5 of the tip segment 7 and of the base segment 6. An elastomeric material 10 has been injected into the groove 16, whilst the head is in its folded state, and is bonded to the sides of the groove 16 and to the strips 17, filling the groove 16 and covering the strips 17. Thereby the toothbrush head is retained in its folded state, and the tip segment 7 is flexibly and resiliently linked to the base segment 6.

The bristles 4 have been inserted by a conventional process, and the angle between the bristle face 5 of the tip segment 7 and the base segment 6 is such that the free ends of the bristles on the handle side of the tip segment are in close proximity to the free ends of bristles on the tip side of the base segment. As shown in Fig. 3 the plane of the ends of bristles 4 on the tip segment 7 slope upwards away from the bristle face 5 of the base segment 6 in the direction away from the handle.

The elastomeric material 10 is extended around the tip 8 of the head 2 to form an external buffer 19 around the tip 8 of the head 2. For this purpose a moulding groove 18 is provided in the outer surface of the tip segment 7.

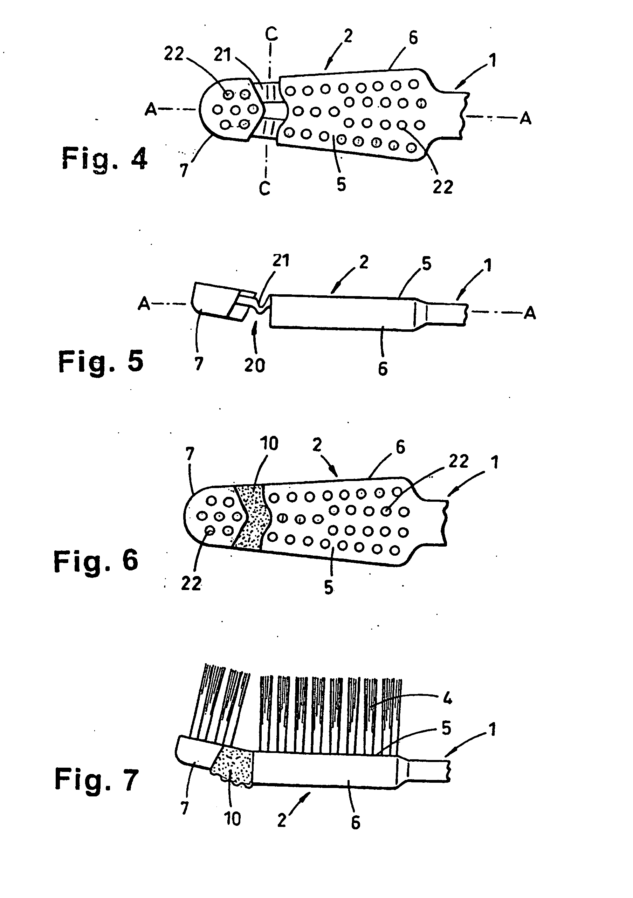

Referring to Figs. 4, 5, 6 and 7, another construction of the head 2 of a toothbrush in which the tip segment 7 is constructed to fold resiliently relative to the base segment 6, during toothbrushing, about a widthways oriented fold axis C-C that crosses the head is shown on plan and in side views.

In Figs. 4 and 5 the head 2 is shown without elastomeric material. The tip segment 7 is generally triangular in shape with a rounded tip. A link region is provided by a chasm 20 between the tip segment 7 and the base segment 6 which is bridged by two strips 21 of a plastics material integral with the material of the head, the strips being thinner than the thickness of the head 2, and extending between the tip segment 7 and base segment 6 to bridge the groove 20. The groove 20 is essentially "V" shaped in plan looking down onto the bristle face 5, with the apex of the "V" pointing toward the handle 2. Relative to the thickness of the toothbrush head 2 the strips are closer to the bristle face 5 than to the back of the head. The strips 21 are not planar, but are curved in and out of the plane of the base segment 6 and tip segment 7.

The bristle face 5 of both the tip 7 and base segment 6 are provided with socket holes 22 for the insertion of bristles 4. As shown in Figs 12-15, in the tip segment 7 the holes 22 are disposed to arrange bristles 4 in a pattern of discrete tufts arranged in a generally circular or polygonal pattern, around a central tuft.

As shown in Figs. 4-7 the "skeleton" consisting of just the plastic material parts of the head has been made by an injection moulding process, with the bristle face 5 folded about the axis C-C so that an obtuse angle of about 165° is formed between the bristle face 5 of the tip segment 7 and of the base segment 6.

An elastomeric material 10 has been injected into the groove 20, whilst the head is in its folded state, and is bonded to the sides of the groove 20 and to the strips 21, filling the groove 20 and covering the strips 21. Thereby the toothbrush head is retained in its folded state, and the tip segment 7 is flexibly and resiliently linked to the base segment 6. The outer surface of the elastomeric material 10 has a corrugated surface as seen in Fig 15.

The bristles 4 shown in Fig. 7 have been inserted by a conventional process, and the angle between the bristle face 5 of the tip segment 7 and the base segment 6 is such that the free ends of the bristles on the handle side of the tip portion are in close proximity to the free ends of bristles on the tip side of the base segment. As shown in Fig. 7 the plane of the ends of bristles 4 on the tip segment 7 slope upwards away from the bristle face 5 of the base segment 6 in the direction away from the handle.

## Claims

1. A process in which a toothbrush comprising a handle (1) with a head (2), both made of plastics material, the head (2) and handle (1) being disposed along a longitudinal toothbrush axis, the head having a base end (3) adjacent to the handle and a tip end (8) remote from the handle, the head (2) having bristles (4) extending from a bristle face (5) of the head (2), the head (2) comprising bristle-bearing segments resiliently and flexibly linked to each other, the head (2) comprising two such segments,
the first segment being a substantially rigid base segment (6) integrally rigidly adjoining the toothbrush handle (1) and extending from the base end (3) of the head (2) to a link region (9,10,16,17,20,21) situated between the base end (3) and the tip segment (7), and the second segment being a substantially rigid tip segment (7) extending from the tip end (8) of the head (2) to the link region (9,10,16,17,20,21), the tip segment (7) being flexibly and resiliently linked at the link region (9,10,16,17,20,21) to the base segment (6),
the link region (9, 10,16,17,20,21) comprising a widthways extending groove (9,16,20) in the plastic material of the head,
the groove (9,16,20) is open at the bristle face (5) of the head (2) having a depth of part of the thickness of the head (2) such that the plastics material at the bottom of the groove forms a thin link of plastics material between the segments, and the groove (9,16,20) is wholly or partly filled with an elastomeric material (10), in its unstressed state the bristle face (5) of the tip segment (7) forms an angle of less than 180° with the bristle face (5) of the base segment (6) is made, being an injection moulding techniques in which a plastics material skeleton is first made by injection moulding, then elastomer is introduced by a subsequent injection moulding step, in which the elastomer (10) is injected as a hot fluid and bonds to the plastics material, ***characterised* in that** firstly a plastics material skeleton of only the plastics material parts is made by injection moulding, with the bristle face (5) substantially flat, then the tip segment (7) is folded such that the tip segment forms an angle of less than 180° with the bristle face of the base segment (6), then the elastomer (10) is injected into the link region (9,10,16,17,20,21).

2. A process according to claim 1 ***characterised* in that** the thin link comprises one thin strip of the plastics material being thinner than the thickness of the head, the elastomer (10) being bonded to the sides of the groove (9,16, 20) and substantially filling the groove (9,16,20).

3. A process according to claim 1 ***characterised* in that** the thin link comprises two or more thin strips (11) of the plastics material being thinner than the thickness of the head, the elastomer (10) being bonded to the sides of the groove (9,16,20) and substantially filling the groove (9,16,20).

4. A process according to claim 1 ***characterised* in that** the thin link comprises a continuous membrane of the plastics material being thinner than the thickness of the head, the elastomer (10) being bonded to the sides of the groove (9,16,20) and substantially filling the groove (9,16,20).

5. A process according to any preceding claim ***characterised* in that** the thin link of plastics material is embedded in a covering layer of elastomer.

6. A process according to any one of claims 1 to 5 ***characterised* in that** the link region (9,10,16,17,20,21) is in the longitudinal half of the head (2) furthest from the base (3) of the head (2).

7. A process according to claim 6 ***characterised* in that** the base segment (6) extends for at least 60% of the distance between the base (3) and the tip (8) of the head (2).

8. A process according to any one of claims 1 to 7 **characterised in that** the angle is between 155°-170°.

9. A process according to any of the preceding claims ***characterised* in that** the head (2) is constructed such that in response to pressure applied to the tip end (8) of the head (2) during toothbrushing the tip segment (7) folds resiliently to increase the angle between the bristle faces (5) of the base segment (6) and the tip segment (7), during toothbrushing, about a widthways oriented fold axis that crosses the head (2) in the link region (9,10,16,17,20,21).

10. A process according to any one of the preceding claims ***characterised* in that** the ends of the bristles (4) remote from the bristle (5) face on the tip segment (7) lie in a different plane to the ends of the bristles (4) remote from the bristle face (5) on the base segment (6) of the head (2).

11. A process according to claim 10 ***characterised* in that** the ends of the bristles remote from the bristle face (5) of the tip segment (7) slope at an angle away from the bristle face (5) of the base segment (6).

12. A process according to any of the preceding claims, ***characterised* in that** the elastomeric material of the link region extends across the head to both sides of the head and is extended around the tip segment of the head to form an elastomeric buffer around the tip end of the head.

## Patentansprüche

1. Verfahren, in dem eine Zahnbürste hergestellt wird, die einen Griff (1) mit einem Kopf (2) umfasst, die beide aus Kunststoffmaterial ausgeführt sind, wobei der Kopf (2) und der Griff (1) entlang einer Zahnbürstenlängsachse angeordnet sind, wobei der Kopf ein Basisende (3) an den Griff benachbart und ein Spitzenende (8) aufweist, das von dem Griff entfernt ist, wobei der Kopf (2) Borsten (4) aufweist, die sich von einer Borstenfläche (5) des Kopfes (2) erstrecken, wobei der Kopf (2) Borsten tragende Segmente aufweist, die nachgiebig und flexibel miteinander verbunden sind, wobei der Kopf (2) zwei derartige Segmente aufweist,
wobei das erste Segment ein im Wesentlichen steifes Basissegment (6) ist, das sich integral steif an den Zahnbürstengriff (1) anschließt und sich von dem Basisende (3) des Kopfes (2) zu einem Verbindungsbereich (9, 10, 16, 17, 20, 21) erstreckt, der zwischen dem Basisende (3) und dem Spitzensegment (7) angeordnet ist, und wobei das zweite Segment ein im Wesentlichen steifes Spitzensegment (7) ist, das sich von dem Spitzenende (8) des Kopfes (2) zu dem Verbindungsbereich (9, 10, 16, 17, 20, 21) erstreckt, wobei das Spitzensegment (7) flexibel und nachgiebig an den Verbindungsbereich (9, 10, 16, 17, 20, 21) mit dem Basissegment (6) verbunden ist,
wobei der Verbindungsbereich (9, 10, 16, 17, 20, 21) eine sich in Breitenrichtung erstreckende Nut (9, 16, 20) in dem Kunststoffmaterial des Kopfes aufweist,
wobei die Nut (9, 16, 20) an der Borstenfläche (5) des Kopfes (2) mit einer Tiefe eines Teiles der Dicke des Kopfes (2) derart offen ist, dass das Kunststoffmaterial an dem Boden der Nut eine dünne Verbindung aus Kunststoffmaterial zwischen den Segmenten schafft, und die Nut (9, 16, 20) vollständig oder teilweise mit einem Elastomermaterial (10) gefüllt ist,
wobei die Borstenfläche (5) des Spitzensegments (7), in ihrem unbelasteten Zustand, einen Winkel von weniger als 180° mit der Borstenfläche (5) des Basissegments (6) ausbildet,
wobei das Verfahren eine Spritzguss-Technik ist, bei der zuerst ein Kunststoffmaterial-Skelett durch Spritzgießen hergestellt wird, dann Elastomer durch einen nachfolgenden Spritzguss-Schritt eingeführt wird, bei dem das Elastomer (10) als ein heißes Fluid eingespritzt wird und sich mit dem Kunststoffmaterial verbindet,
**dadurch gekennzeichnet, dass** zuerst ein Kunststoffmaterial-Skelett lediglich aus den Kunststoffteilen durch Spritzgießen hergestellt wird, wobei die Borstenfläche (5) im Wesentlichen flach ist, wobei dann das Spiteznsegment (7) derart geklappt wird, dass das Spitzensegment einen Winkel von weniger als 180° mit der Borstenfläche des Basissegments (6) ausbildet, wobei dann das Elastomer (10) in den Verbindungsbereich (9, 10, 16, 17, 20, 21) eingespritzt wird.

2. Verfahren nach Anspruch 1, **dadurch**
**gekennzeichnet, dass** die dünne Verbindung einen dünnen Streifen des Kunststoffmaterials aufweist, der dünner ist als die Dicke des Kopfes, wobei das Elastomer (10) an die Seiten der Nut (9, 16, 20) verbunden ist und im Wesentlichen die Nut (9, 16, 20) füllt.

3. Verfahren nach Anspruch 1, **dadurch**
**gekennzeichnet, dass** die dünne Verbindung zwei oder mehr dünne Streifen (11) des Kunststoffmaterials aufweist, die dünner sind als die Dicke des Kopfes, wobei das Elastomer (10) an die Seiten der Nut (9, 16, 20) verbunden ist und die Nut (9, 16, 20) im Wesentlichen füllt.

4. Verfahren nach Anspruch 1, **dadurch**
**gekennzeichnet, dass** die dünne Verbindung eine fortlaufende Membran des Kunststoffmaterials aufweist, die dünner ist als die Dicke des Kopfes, wobei das Elastomer (10) an die Seiten der Nut (9, 16, 20) verbunden ist und im Wesentlichen die Nut (9, 16, 20) füllt.

5. Verfahren nach einem der vorangehenden Ansprüche, **dadurch gekennzeichnet, dass** die dünne Verbindung aus Kunststoffmaterial in eine Abdeckschicht aus Elastomer eingebettet ist.

6. Verfahren nach einem der Ansprüche 1 bis 5, **dadurch**
**gekennzeichnet, dass** der Verbindungsbereich (9, 10, 16, 17, 20, 21) sich in der Längshälfte des Kopfes (2) befindet, der von der Basis (3) des Kopfes (2) am weitesten entfernt ist.

7. Verfahren nach Anspruch 6, **dadurch**
**gekennzeichnet, dass** das Basissegment (6) sich über wenigstens 60% des Abstandes zwischen der Basis (3) und der Spitze (8) des Kopfes (2) erstreckt.

8. Verfahren nach einem der Ansprüche 1 bis 7, **dadurch**
**gekennzeichnet, dass** der Winkel zwischen 155° und 170° liegt.

9. Verfahren nach einem der vorangehenden Ansprüche, **dadurch gekennzeichnet, dass** der Kopf (2) derart gestaltet ist, dass als Reaktion auf einen auf das Spitzenende (8) des Kopfes (2) während des Zähneputzens aufgebrachten Druckes sich das Spitzensegment (7) nachgiebig faltet, um den Winkel während des Zähneputzens zwischen den Borstenflächen (5) des Basissegments (6) und dem Spitzensegment (7) um eine in Breitenrichtung ausgerichtete Faltachse, die den Kopf (2) in dem Verbindungsbereich (9, 10, 16, 17, 20, 21) kreuzt, zu vergrößern.

10. Verfahren nach einem der vorangehenden Ansprüche, **dadurch gekennzeichnet, dass** die Enden der Borsten (4), die von der Borstenfläche (5) an dem Spitzensegment (7) entfernt sind, in einer unterschiedlichen Ebene zu den Enden der Borsten (4) liegen, die von der Borstenfläche (5) an dem Basissegment (6) des Kopfes (2) entfernt liegen.

11. Zahnbürste nach Anspruch 10, **dadurch**
**gekennzeichnet, dass** die Enden der Borsten, die von der Borstenfläche (5) des Spitzensegments (7) entfernt liegen, in einem Winkel geneigt sind.

12. Verfahren nach einem der vorangehenden Ansprüche, **dadurch gekennzeichnet, dass** das Elastomermaterial des Verbindungsbereichs sich über den Kopf zu beiden Seiten des Kopfes erstreckt und um das Spitzensegment des Kopfes zur Ausbildung eines Elastomer-Puffers um das Spitzenende des Kopfes ausgedehnt ist.

## Revendications

1. Un procédé dans lequel une brosse à dents comprenant un manche (1) avec une tête (2), tous deux fabriqués en matière plastique, la tête (2) et le manche (1) étant disposés le long d'un axe longitudinal de la brosse à dents, la tête ayant une extrémité de base (3) adjacente au manche et un bout (8) à l'opposé du manche, la tête (2) portant des poils (4) qui s'étendent à partir d'une face côté poils (5) de la tête (2), la tête (2) comprenant des segments portant des poils et reliés l'un à l'autre de façon élastique et flexible, la tête (2) comprenant au maximum deux de ces segments,
le premier segment étant un segment de base sensiblement rigide (6) joint solidairement de façon rigide au manche (1) de la brosse à dents et s'étendant à partir de l'extrémité de base (3) de la tête (2) jusqu'à une région de liaison (9,10,16,17,20,21) située entre l'extrémité de base (3) et le segment d'extrémité (7), et le deuxième segment étant un segment d'extrémité sensiblement rigide (7) s'étendant à partir du bout (8) de la tête (2) jusqu'à la région de liaison (9,10,16,17,20,21), le segment d'extrémité (7) étant relié de façon flexible et élastique au segment de base (6) à l'endroit de la région de liaison (9,10,16,17,20,21),
la région de liaison (9,10,16,17,20,21) comprenant une rainure (9,16,20) qui s'étend dans le sens de la largeur dans la matière plastique de la tête,
la rainure (9,16,20) est ouverte dans la face côté poils (5) de la tête (2) et sa profondeur s'étend sur une partie de l'épaisseur de la tête (2) d'une manière telle que la matière plastique au fond de la rainure définit une liaison mince de matière plastique entre les segments, et la rainure (9,16,20) est remplie en totalité ou en partie avec une matière élastomère (10), dans son état de repos, la face côté poils (5) du segment d'extrémité (7) forme un angle inférieur à 180° avec la face côté poils (5) du segment de base (6), qui utilise une technique de moulage par injection dans laquelle on fabrique d'abord un squelette en matière plastique par moulage par injection, puis on introduit un élastomère par une opération subséquente de moulage par injection dans laquelle l'élastomère (10) est injecté à l'état de fluide chaud et se lie à la matière plastique **caractérisé en ce qu'**on fabrique d'abord un squelette de matière plastique comprenant seulement les parties en matière plastique, par moulage par injection, la face côté poils (5) étant sensiblement plane, puis on plie le segment d'extrémité (7) de sorte que le segment d'extrémité forme un angle inférieur à 180° avec la face côté poils du segment de base (6), puis on injecte l'élastomère (10) dans la région de liaison (9,1016,17,20,21).

2. Procédé selon la revendication 1, **caractérisée en ce que** la liaison mince comprend une bande mince de la matière plastique qui est plus mince que l'épaisseur de la tête, l'élastomère (10) étant lié aux côtés de la rainure (9,16,20) et remplissant sensiblement la rainure (9,16,20).

3. Procédé selon la revendication 1, **caractérisée en ce que** la liaison mince comprend deux bandes minces ou davantage (11) de la matière plastique qui sont plus minces que l'épaisseur de la tête, l'élastomère (10) étant lié aux côtés de la rainure (9,16,20) et remplissant sensiblement la rainure (9,16,20).

4. Procédé selon la revendication 1, **caractérisée en ce que** la liaison mince comprend une membrane continue de la matière plastique qui est plus mince que l'épaisseur de la tête, l'élastomère (10) étant lié aux côtés de la rainure (9,16,20) et remplissant sensiblement la rainure (9,16,20).

5. Procédé selon une quelconque des revendications précédentes, **caractérisée en ce que** la liaison mince de matière plastique est noyée dans une couche d'élastomère de couverture.

6. Procédé selon une quelconque des revendications 1 à 5, **caractérisée en ce que** la région de liaison (9,10,16,17,20,21) est dans la moitié longitudinale de la tête (2) la plus éloignée de la base (3) de la tête (2).

7. Procédé selon la revendication 6, **caractérisée en ce que** le segment de base (6) s'étend sur au moins 60% de la distance entre la base (3) et le bout (8) de la tête (2).

8. Procédé selon une quelconque des revendications 1 à 7, **caractérisée en ce que** l'angle est compris entre 155° et 170°.

9. Procédé selon une quelconque des revendications précédentes, **caractérisée en ce que** la tête (2) est construite de sorte que, en réponse à l'application d'une pression au bout (8) de la tête (2) pendant le brossage des dents, le segment d'extrémité (7) se plie élastiquement de manière à augmenter l'angle entre les faces côté poils (5) du segment de base (6) et du segment d'extrémité (7), pendant le brossage des dents, autour d'un axe de pliage orienté transversalement qui croise la tête (2) dans la région de liaison (9,10,16,17,20,21).

10. Procédé selon une quelconque des revendications précédentes, **caractérisée en ce que** les extrémités des poils (4) éloignées de la face côté poils (5) sur le segment d'extrémité (7) se trouvent dans un plan différent par rapport aux extrémités des poils (4) éloignées de la face côté poils (5) sur le segment de base (6) de la tête (2).

11. Procédé selon la revendication 10, **caractérisée en ce que** les extrémités des poils éloignées de la face côté poils (5) du segment d'extrémité (7) suivent une pente en s'éloignant de la face côté poils (5) du segment de base (6).

12. Procédé selon une quelconque des revendications précédentes, **caractérisée en ce que** la matière élastomère de la région de liaison s'étend de part et d'autre de la tête jusqu'aux deux côtés de la tête et elle est prolongée autour du segment d'extrémité de la tête pour former un tampon d'élastomère autour du bout de la tête.
